# FASCICULE DE BREVET EUROPEEN

(11) **EP 0 704 127 B1**
(45) Date de publication et mention de la délivrance du brevet: **05.03.1997**
(21) Numéro de dépôt: 92924524.9
(22) Date de dépôt: 09.12.1992
(51) Int. Cl.: H04M 3/28

(54) **APPAREIL ET METHODE DE VERIFICATION PAR LESQUELS DES LIENS DE COMMUNICATION PEUVENT ETRE CHOISIS ET VERIFIES**
ANORDNUNG UND VERFAHREN ZUR AUSWAHL UND PRÜFUNG VON KOMMUNIKATIONSLEITUNGEN
APPARATUS AND METHOD FOR CHOOSING AND CHECKING COMMUNICATION LINES

(30) Priorité: 13.12.1991 US 806630
(43) Date de publication de la demande: 03.04.1996
(73) Titulaire: HYDRO-QUEBEC, Montréal Québec H2Z 1A4 (CA)
(72) Inventeur: TREMBLAY, Gilles, Jonquière, Québec G7S 5G3 (CA)
(74) Mandataire: Peuscet, Jacques
(86) Numéro de dépôt international: CA9200539
(87) Numéro de publication internationale: WO9312605

(56) Documents cités:
- DE-A- 3 110 633
- DE-A- 3 127 508
- TELCOM REPORT vol. 14, No. 5, September 1991, MÜNCHEN DE pages 274 - 275 BRETSCHNEIDER ET AL 'SONDER-UND DATENLEITUNGEN SCHNELL IM GRIFF'

## Description

La présente invention vise un appareil de vérification par lequel un utilisateur peut choisir et vérifier des liens de communication d'un système de communication qui relie des stations intermédiaires à des stations éloignées, et une méthode pour vérifier lesdits liens.

Connu dans l'art, il existe le document TELCOM REPORT, vol.14, no.5, Septembre 1991, MUNICH DE, pages 274-275; Bretschneider et al.: "SONDER- UND DATENLEITUNGEN SCHNELL IM GRIFF" qui mentionne l'utilisation d'un second système de communication par des modems et des lignes téléphoniques pour transmettre et recevoir des signaux entre un endroit éloigné et des stations éloignées, qui permet à un utilisateur, muni d'un ordinateur localisé à cet endroit éloigné, de choisir et vérifier des liens de communication d'un premier système de communication. Dans ce système l'ordinateur communique par deux modems avec les modems (un modem pour chaque station) de deux stations éloignées par des lignes téléphoniques. Chacune des stations éloignées comprend une unité de contrôle, un système de commutation et un dispositif pouvant générer et mesurer un signal. Un des inconvénients avec ce système c'est qu'il requiert que chaque station éloignée soit dotée d'une unité de contrôle relativement sophistiquée.

Connu dans l'art antérieur, il existe le brevet américain no. 4,998,240 délivré le 5 mars 1991, et nommant comme inventeur Clifton B. WILLIAMS. Ce brevet décrit un système et une méthode pour vérifier à distance un protocole ISDN d'un bureau central. Un objectif de cette invention est de vérifier des lignes client ISDN sans avoir besoin d'envoyer du personnel chez le client ou au bureau central.

Dans le système décrit dans ce brevet américain no. 4,998,240, le lien qui relie les équipements, qui doit être vérifié, est aussi utilisé pour envoyer les signaux de commande concernant les procédures de vérification à réaliser. Ainsi, si le lien est brisé ou ne peut transmettre efficacement le signal de données, alors il est impossible d'effectuer une procédure de vérification. Aussi, la nature des procédures de vérification qui sont effectuées est très spécifique et vise à vérifier la transmission de protocoles et l'intégrité des données. Ces procédures de vérification ne procurent aucune information sur la qualité du lien lui-même. De plus, ce système peut seulement être utilisé avec de l'équipement AT&T (marque de commerce) et utilise des fonctions déjà programmées dans le système.

Également connu dans l'art antérieur, il existe le brevet américain no. 4,055,808 délivré le 25 octobre 1977, nommant Jerry L. HOLSINGER et al. comme inventeurs. Dans ce brevet, on décrit une unité de vérification de station intermédiaire destinée à être branchée à une unité de communication située à une station intermédiaire dans un système de communication de données. Le système comprend en outre des premiers moyens de transmission de données pour envoyer des signaux à des ports situés en amont du système de communication à partir d'une station centrale. L'unité de communication comprend en outre un port situé en aval pour envoyer des signaux à d'autres moyens de transmission de données qui sont branchés à des stations éloignées. Les signaux ont des premières caractéristiques au port situé en amont et des secondes caractéristiques au port situé en aval. Le système de communication de données comprend en outre une unité centrale de vérification située à la station centrale pour transmettre un signal de vérification et de contrôle ayant une partie représentative d'une commande et une partie représentative d'une adresse. Le système utilise un protocole de commande par adressage à l'intérieur du signal de vérification et de contrôle circulant à l'intérieur du système de communication de données. Avec un tel système, il n'est pas possible de vérifier les circuits qui sont hors d'usage au point où ils ne peuvent recevoir ou transmettre le signal de vérification et de contrôle. De plus, il n'y a aucune communication directe entre la station centrale et les stations éloignées.

Également connus dans l'art antérieur, il existe les brevets américains suivants qui décrivent différentes méthodes et appareillages de vérification d'un système de communication:
5,027,343 (CHAN et al.)
4,945,554 (KRAUSE et al.)
4,937,851 (LYNCH et al.)
4,918,623 (LOCKITT et al.)
4,682,347 (LYNCH)
4,611,101 (WALTER et al.)
4,419,751 (CHOLAT-NAMY et al.)
4,076,961 (HOLSINGER et al.)

Un des inconvénients que l'on retrouve dans la pluspart de ces appareils et méthodes de vérification réside dans le fait que si un lien de communication du système est complètement hors d'usage ou déficient au point où il ne peut pas transmettre une information, alors il n'est pas possible d'effectuer une procédure de vérification sur le lien.

Ainsi, un objectif de la présente invention est de produire un appareil de vérification plus simple que celui décrit dans le document "TELCOM REPORT" et une méthode par lesquelles un utilisateur peut choisir et vérifier des liens de communication d'un système de communication même si le lien de communication choisi est complètement hors d'usage ou très abîmé.

Les objets, avantages et autres caractéristiques de la présente invention deviendront plus apparents à la lecture de la description suivante qui ne se veut pas restrictive, d'un mode de réalisation préféré donné à titre d'exemple seulement avec référence aux dessins ci-joints.

### RÉSUMÉ DE L'INVENTION

La présente invention vise appareil de vérification par lequel un utilisateur peut choisir et vérifier des liens de communication d'un premier système de communication qui relie une station intermédiaire à des stations éloignées, ledit appareil de vérification étant situé à ladite station intermédiaire, chacune desdites stations éloignées comprenant un modem pour établir un second système de communication entre ladite station intermédiaire et lesdites stations éloignées, chacune desdites stations éloignées comprenant un module de contrôle relié au second système de communication à partir duquel des signaux de commande peuvent être reçus, chacun desdits modules de contrôle étant aussi relié aux liens de communication correspondants du premier système de façon à ce qu'au moins un desdits liens dudit premier système de communication puisse être choisi entre ladite station intermédiaire et une desdites stations éloignées;
ledit appareil de vérification comprenant:
- un premier modem pour recevoir et transmettre des signaux générés à partir d'un ordinateur, qui est équipé d'un modem pour communiquer avec ledit premier modem et qui est localisé à un endroit éloigné, ledit premier modem faisant partie dudit second système de communication;
- une unité de contrôle reliée audit premier modem pour recevoir et transmettre des signaux;
- un dispositif pouvant générer et mesurer un signal, relié à ladite unité de contrôle, ledit dispositif ayant une entrée pour recevoir un signal à être mesuré et une sortie pour générer un signal prédéterminé;
- un système de commutation contrôlé par ladite unité de contrôle et reliant les liens de communication correspondants dudit premier système de communication avec ledit dispositif pouvant générer et mesurer un signal, par lequel un des liens de communication correspondants dudit premier système de communication peut être choisi par ladite unité de contrôle et relié auxdites entrée et sortie dudit dispositif pouvant générer et mesurer un signal; ainsi ledit utilisateur peut choisir au moins un desdits liens dudit premier système de communication entre ladite station intermédiaire et une desdites stations éloignées en envoyant des signaux de commande via ledit second système de communication, et contrôler un procédure de vérification sur ledit lien qui a été choisi par l'utilisateur via ledit second système de communication;
ledit appareil étant caractérisé en ce qu'il comprend:
- un second modem relié à ladite unité de contrôle pour recevoir et transmettre des signaux, ledit second modem faisant partie dudit second système de communication de façon à ce qu'une communication puisse être établie entre ledit ordinateur, par le modem, et lesdites stations éloignées, par le modem, via ladite station intermédiaire, par les modems, par l'entremise dudit second système de communication.

La présente invention vise aussi une méthode par laquelle un utilisateur muni d'un ordinateur peut choisir et vérifier des liens de communication d'un premier système de communication qui relie une station intermédiaire à des stations éloignées, ladite station intermédiaire étant munie d'un appareil de vérification équipé d'un premier lien de communication d'un second système de communication pour communiquer avec ledit ordinateur, et un second lien de communication dudit second système de communication pour communiquer avec lesdites stations éloignées, ladite méthode comprenant les étapes suivantes:
(a) établir une première connexion entre ledit ordinateur et ladite station intermédiaire à partir de commandes provenant dudit ordinateur par ledit second système de communication;
(b) établir une deuxième connexion entre ladite station intermédiaire et une desdits stations éloignées qui a été choisie par ledit utilisateur à partir de commandes provenant dudit ordinateur par le second système de communication pour choisir un lien de communication du premier système de communication entre ladite station intermédiaire et la station éloignée qui a été choisie;
(c) envoyer des signaux de commande audit appareil de vérification via ladite première connexion pour initier une procédure de vérification sur ledit lien de communication qui a été choisi à partir de commandes provenant dudit ordinateur; et
(d) transmettre des résultats de ladite procédure de vérification dudit appareil de vérification audit ordinateur via ladite première connexion, ainsi un utilisateur peut choisir un lien de communication particulier dudit premier système de communication par l'étape (b), initier ladite procédure de vérification sur ledit lien particulier par l'étape (c) et être informé du résultat de ladite procédure de vérification par l'étape (d).

### BRÈVE DESCRIPTION DES DESSINS

La figure 1 est un schéma bloc illustrant un système de communication comprenant les moyens nécessaires pour réaliser la méthode selon la présente invention.

La figure 2 est un schéma bloc illustrant avec plus de détails l'appareil de vérification montré à la figure 1.

La figure 3 est un schéma bloc illustrant avec plus de détails le dispositif pouvant générer et mesurer un signal, montré à la figure 2.

La figure 4 est un schéma bloc illustrant avec plus de détails le module de contrôle d'une des stations éloignées montrées à la figure 1.

La figure 5 est un schéma bloc illustrant avec plus de détails une autre réalisation du module de contrôle d'une des stations éloignées montrées à la figure 1.

### DESCRIPTION DÉTAILLÉE DES DESSINS

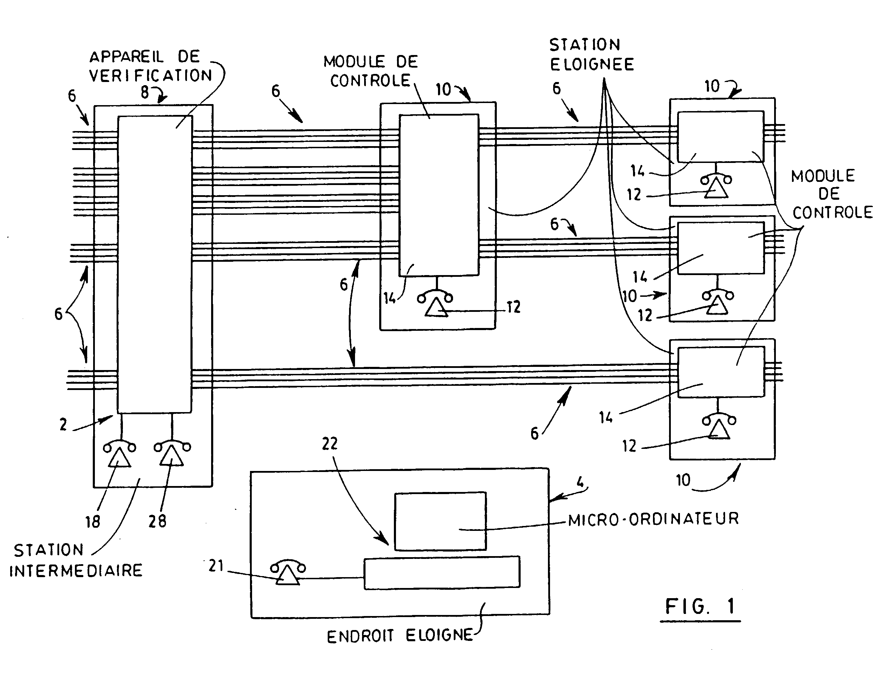

En se référant maintenant à la figure 1, on montre un appareil de vérification 2 par lequel un utilisateur situé à un endroit éloigné 4 peut choisir et vérifier des liens de communication 6 d'un premier système de communication qui relie une station intermédiaire 8 à des stations éloignées 10. Chaque lien de communication est fait de deux fils de transmission et de deux fils de réception. L'appareil de vérification 2 est situé à la station intermédiaire 8. Chacune des stations éloignées 10 comprend un modem 12 pour établir un second système de communication entre la station intermédiaire 8 et les stations éloignées 10. Chacune des stations éloignées 10 comprend un module de contrôle 14 pour recevoir des signaux de commande de son modem correspondant 12. Les modules de contrôle 14 sont branchés aux liens de communication correspondants 6 de façon à ce qu'au moins un des liens de communication 6 puisse être choisi entre la station intermédiaire 8 et une des stations éloignées 10.

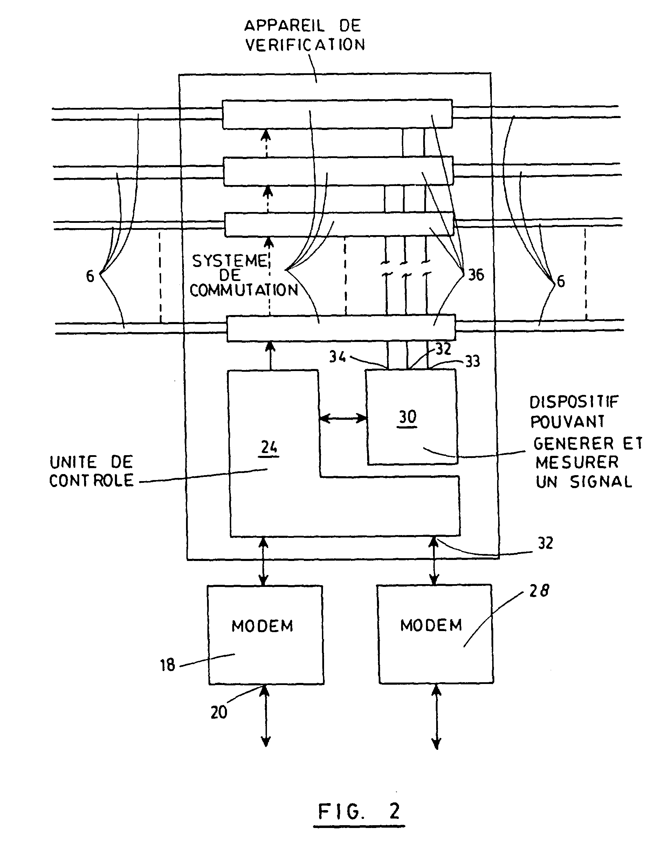

En se référant maintenant aux figures 1 et 2, l'appareil de vérification 2 comprend un premier modem 18 pour recevoir et transmettre des signaux générés à partir d'un ordinateur 22 équipé avec un modem 21 situé à un endroit éloigné 4. Le premier modem 18 fait partie du second système de communication. L'appareil de vérification comprend une unité de contrôle 24 branchée au premier modem 18 pour recevoir et transmettre des signaux. Un second modem 28 est prévu. Il est branché à l'unité de contrôle 24 pour recevoir et transmettre des signaux. Le second modem 28 fait partie du second système de communication de façon à ce qu'une communication puisse être établie entre l'endroit éloigné 4 et les stations éloignées 10 via la station intermédiaire 8 au moyen des modems 12 du second système de communication.

Un dispositif 30 pouvant générer et mesurer un signal est prévu. Il est branché à l'unité de contrôle 24, et comprend des entrées 32 et 33 pour recevoir un signal destiné à être mesuré et une sortie 34 pour générer un signal prédéterminé.

L'appareil de vérification 2 comprend aussi un système de commutation 36 contrôlé par l'unité de contrôle 24 pour inter-relier les liens de communication correspondants 6 du premier système de communication avec le dispositif 30 pouvant générer et mesurer un signal, par lequel un des liens de communication correspondants 6 peut être choisi par l'unité de contrôle 24 et branché aux entrées 32 et 33 et à la sortie 34 du dispositif 30 pouvant générer et mesurer un signal, ainsi l'utilisateur peut choisir au moins un des liens 6 entre la station intermédiaire 8 et une des stations éloignées 10 en envoyant des signaux de commande via le second système de communication, et contrôler une procédure de vérification sur le lien 6 qui a été choisi par l'utilisateur via le second système de communication.

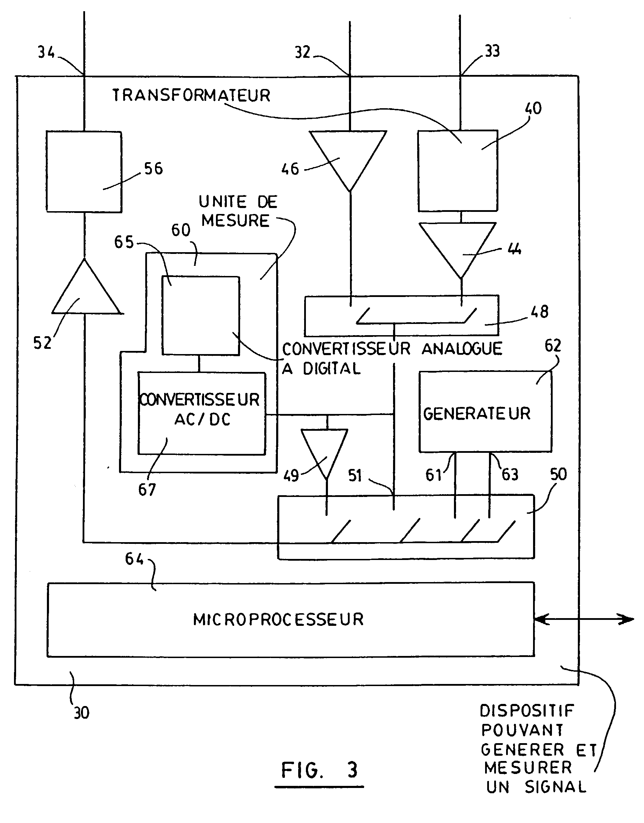

En se référant maintenant plus spécifiquement aux figures 2 et 3, les entrées 32 et 33 du dispositif 30 pouvant générer et mesurer un signal comprennent une entrée intermédiaire 32 pour recevoir un branchement intermédiaire du lien de communication qui a été choisi et une entrée directe 33 pour recevoir le lien de communication qui a été choisi. Le dispositif 30 pouvant générer et mesurer un signal comprend un premier transformateur de couplage 40 ayant une entrée, branchés à l'entrée directe 33, des premier et second amplificateurs 44 et 46 ayant des hautes impédances d'entrées, branchés respectivement à une sortie du transformateur 40 et à l'entrée intermédiaire 32, un premier dispositif de commutation 48 ayant deux entrées branchées respectivement aux sorties des premier et second amplificateurs 44 et 46, un second dispositif de commutation 50 ayant une entrée 51 branchée à une sortie du premier dispositif de commutation 48, et un troisième amplificateur 52 ayant une haute impédance d'entrée, branché à la sortie du second dispositif de commutation 50. Le dispositif 30 pouvant générer et mesurer un signal comprend aussi un second transformateur de couplage 56 ayant une entrée branchée à une sortie du troisième amplificateur 52, et une sortie branchée à la sortie 34 du dispositif 30 pouvant genérer et mesurer un signal; une unité de mesure 60 ayant une entrée branchée à la sortie du premier dispositif de commutation 48; un générateur de signal 62 ayant deux sorties branchées respectivement à des entrées du second dispositif de commutation 50; et un microprocesseur 64 ayant une entrée branchée à l'unité de contrôle 24, et différentes connexions qui ne sont pas montrées sur la figure 3, avec les dispositifs de commutation 48 et 50, l'unité de mesure 60 et le générateur de signal 62. Ainsi, l'utilisateur peut contrôler une procédure de vérification en envoyant des signaux de commande au microprocesseur 64 via le second système de communication.

Il est important de réaliser que le second système de communication est constitué de lignes téléphoniques et de modems. Dans la figure 3, la connexion entre le microprocesseur 64 et l'unité de contrôle 24 est faite par un lien RS 232. La sortie du premier dispositif de commutation 48 est aussi reliée à une entrée du second dispositif de commutation 50 par un amplificateur 49 ayant un gain de 16 db. Le générateur de signal 62 est un générateur programmable d'ondes sinusoïdales ayant une première sortie 61 de 0 db et une second sortie 63 de -8 db. L'unité de mesure 60 comprend un convertisseur analogue à digitale 65 de 8 bits et un convertisseur RMS AC/DC 67. Les transformateurs de couplage 40 et 56 sont des transformateurs 1:1. Le générateur 62 est capable de générer un signal d'onde sinusoïdale ayant une fréquence variant de 300 à 3000 Hz à 0 db et -8 db. Le convertisseur 67 convertit un signal alternatif en signal DC lequel est la valeur RMS du signal alternatif.

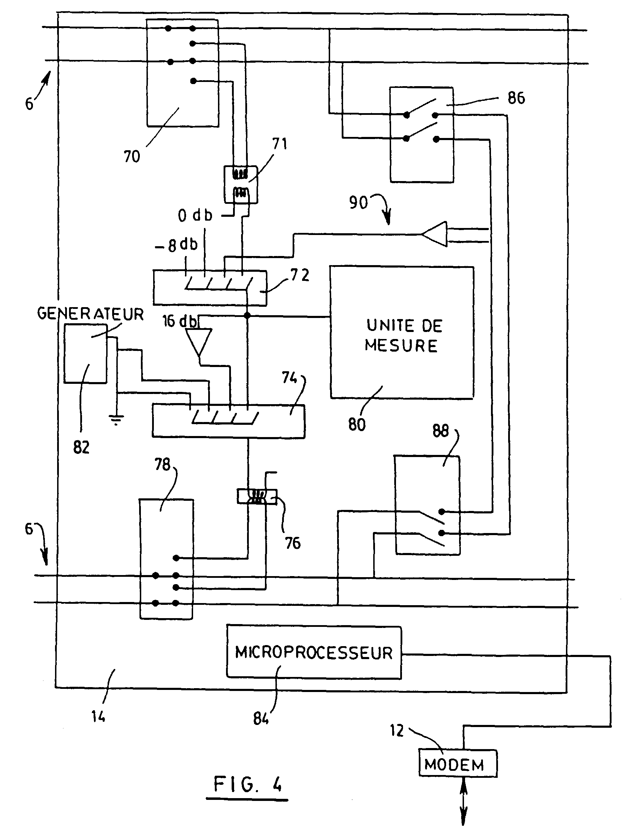

En se référant maintenant à la figure 4, on montre un des modules de contrôle qui est situé à chacune des stations éloignées. Ce module de contrôle 14 est branché au modem correspondant 12. Ce module de contrôle 14 comprend un premier dispositif de commutation 70 ayant une entrée branchée en série à la ligne réceptrice du lien de communication correspondant 6; un premier transformateur de couplage 71 ayant une entrée branchée à une sortie du premier dispositif de commutation 70; un second dispositif de commutation 72 ayant une entrée branchée à une sortie du premier transformateur de couplage 71; un troisième dispositif de commutation 74 ayant une entrée branchée à une sortie du second dispositif de commutation 72; un second transformateur de couplage 76 ayant une entrée branchée à une sortie du troisième dispositif de commutation 74; un quatrième dispositif de commutation 78 ayant une entrée branchée à une sortie du second transformateur de couplage 76, et une sortie branchée en série avec la ligne de transmission du lien de communication correspondant 6; une unité de mesure 80 ayant une entrée branchée à la sortie du second dispositif de commutation 72; et un générateur de signal 82 ayant une sortie branchée à une entrée du troisième dispositif de commutation 74. Le module de contrôle 14 comprend aussi un microprocesseur 84 branchée au modem correspondant 12, et différentes connexions qui ne sont pas montrées sur cette figure 4, avec les dispositifs de commutation 70, 72, 74 et 78; l'unité de mesure 80 et le générateur de signal 82, par lequel l'utilisateur peut contrôler une procédure de vérification à une des stations éloignées 10 en envoyant des signaux de commande au microprocesseur correspondant 84 via le second système de communication.

Le module de contrôle 14 comprend aussi un cinquième dispositif de commutation 86 ayant une entrée branchée en parallèle avec la ligne de réception du lien de communication correspondant 6; un sixième dispositif de commutation 88 ayant une entrée branchée à une sortie du cinquième dispositif de commutation 86, et une sortie branchée à la ligne de transmission du lien de communication correspondant 6; et un branchement intermédiaire 90 ayant une entrée branchée à la sortie du cinquième dispositif de commutation 86, et une sortie branchée à une entrée du second dispositif de commutation 72. Le microprocesseur 84 a aussi différentes connexions qui ne sont pas montrées sur cette figure 4, avec les cinquième et sixième dispositifs de commutation 86 et 88, par lequel l'utilisateur peut contrôler des procédures de vérification additionnelles aux stations éloignées 10 en envoyant des signaux de commande au microprocesseur correspondant 84 via le second système de communication.

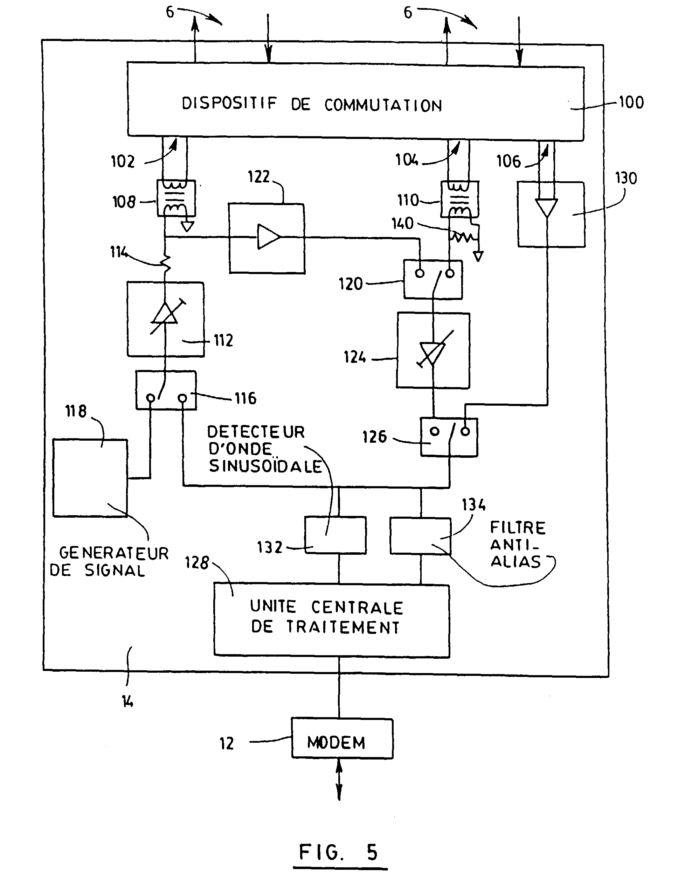

En se référant maintenant à la figure 5, on peut voir un autre mode de réalisation d'un des modules de contrôle qui sont disposés dans les stations éloignées. Il est à noter que la portion de ce circuit qui se situe entre le dispositif de commutation 100 et le modem 12 peut aussi être utilisé pour remplacer le dispositif pouvant générer et mesurer un signal montré à la figure 3. ce module de contrôle 14 est branché au modem correspondant 12. Ce module de contrôle 14 comprend un premier dispositif de commutation 100 ayant une entrée à quatre fils branchée avec un des liens de communication correspondants 6. Chaque lien de communication 6 comprend deux fils de réception et deux fils de transmission. Le dispositif de commutation 100 comprend aussi une entrée à deux fils 102, et une première sortie à deux fils 104. Un premier transformateur de couplage 108 a une sortie branchée à l'entrée à deux fils 102. Un second transformateur de couplage 110 a une entrée branchée à la première sortie à deux fils 104. Un amplificateur à gain variable 112 a une sortie branchée à une entrée du premier transformateur 108 via une résistance 114 de 600 ohms. Un second dispositif de commutation 116 a une sortie branchée à une entrée de l'amplificateur à gain variable 112. Un générateur de signal 118 a une sortie branchée à une entrée d'un second dispositif de commutation 116. Un troisième dispositif de commutation 120 à une première entrée branchée à l'entrée du premier transformateur 108 via un circuit tampon 122, et une seconde entrée branchée à une sortie du second transformateur 110. Un second amplificateur à gain variable 124 a une entrée branchée à une sortie du troisième dispositif de commutation 120. Un quatrième dispositif de commutation 126 a une entrée branchée à une sortie du second amplificateur 124, et une sortie branchée à une entrée du second dispositif de commutation 116.

Le module de contrôle 14 comprend aussi une unité centrale de traitement 128 branchée au modem correspondant 12, et différentes connexions qui ne sont pas montrées sur cette figure 5, avec les dispositifs de commutation 100, 116, 120 et 126, les amplificateur 112 et 124, et le générateur de signal 118, par lequel l'utilisateur peut contrôler une procédure de vérification à une des stations éloignées en envoyant des signaux de commande à l'unité centrale de traitement correspondante 128 via le second système de communication.

Le module de contrôle 14 comprend en outre un amplificateur différentiel 130 branché à une seconde sortie 106 du premier dispositif de commutation 100, et une sortie branchée à une seconde entrée du quatrième dispositif de commutation 126; un détecteur d'onde sinusoïdale 132 ayant une entrée branchée à la sortie du quatrième dispositif de commutation 126, et une sortie branchée à une entrée de l'unité centrale de traitement 128; et un filtre anti-alias 134 ayant une entrée branchée à une sortie du quatrième dispositif de commutation 126, et une sortie branchée à une entrée de l'unité centrale de traitement 128.

Une résistance 140 de 600 ohms est branchée à la sortie du transformateur 110. Les amplificateurs à gain variable 112 et 124 ont des gains qui sont contrôlés par l'unité centrale de traitement 128. Au moyen du dispositif de commutation 126, l'unité centrale de traitement 128 peut choisir différents types d'entrées de signal. Au moyen du dispositif de commutation 120, l'unité centrale de traitement 128 peut effectuer une mesure normale du lien ou une mesure de bruit dudit lien. Le filtre 134 est requis pour effectuer un échantillonnage qui est réalisé par l'unité centrale de traitement. Le détecteur d'onde sinusoïdale 132 est requis pour convertir son signal d'entrée en un signal d'onde carrée. Le circuit tampon 122 est requis pour mesurer le bruit sur le lien choisi. L'amplificateur 130 est requis pour effectuer une mesure en pont sur le lien choisi.

Avec l'équipement montré dans ces figures 1 à 5, une méthode selon la présente invention peut être réalisée, par laquelle un utilisateur muni d'un ordinateur 22 équipé d'un modem 21, situé à un endroit éloigné 4, peut choisir et vérifier des liens de communication 6 d'un premier système de communication qui relie une station intermédiaire 8 à des stations éloignées 10. La station intermédiaire 8 est munie d'un appareil de mesure 2 équipé d'un premier modem 18 pour communiquer avec l'endroit éloigné 4, et d'un second modem 28 pour communiquer avec les modems 12 situés aux stations éloignées 10. La méthode comprend les étapes qui consistent à (a) établir une première connexion entre le modem 21 situé à l'endroit éloigné 4 et le premier modem 18 de la station intermédiaire 8, à partir de commandes provenant de l'ordinateur 22; (b) établir une seconde connexion entre le second modem 28 de la station intermédiaire 8 et le modem 12 d'une des stations éloignées 10 qui aura été choisie par l'utilisateur, à partir de commandes provenant de l'ordinateur 22 pour choisir un lien de communication du premier système de communication entre la station intermédiaire 8 et la station éloignée qui aura été choisie; (c) envoyer des signaux de commande à l'appareil de vérification 2 via la première connexion pour initier une procédure de vérification sur le lien de communication qui a été choisi, à partir de commandes provenant de l'ordinateur 22; et (d) transmettre les résultats de la procédure de vérification depuis l'appareil de vérification 2 à l'ordinateur 22 via la première connexion. Ainsi, un utilisateur peut choisir un lien de communication particulier du premier système de communication au moyen de l'étape (b), initier une procédure de vérification sur le lien particulier qui a été choisi au moyen de l'étape (c) et être informé des résultats de la procédure de vérification au moyen de l'étape (d).

La méthode peut comprendre en outre une étape consistant à envoyer des signaux de commande à partir de l'ordinateur 22 à la station intermédiaire 8 via la première connexion,et à la station éloignée qui a été choisie via les première et seconde connexions, pour temporairement débrancher le lien de communication qui a été choisi, du premier système de communication au moyen de dispositifs de commutation présents aux stations, de manière à ce que la procédure de vérification effectuée durant l'étape (c) puisse être une procédure en circuit fermé.

Chacune des stations éloignées 10 est munie d'un module de contrôle 14 branché entre le modem correspondant 12 et les liens de communication correspondants 6. La méthode peut comprendre en outre une étape consistant à envoyer des signaux de commande au module de contrôle 14 de la station éloignée qui a été choisie par l'entremise des première et seconde connexions pour initier une procédure de vérification à partir de la station éloignée qui a été choisie sur le lien de communication qui a été choisi, à partir de commandes provenant de l'ordinateur 22.

Le présent système et la méthode peuvent être spécifiquement adaptés pour vérifier les systèmes de communication à quatre fils qui sont généralement utilisés pour transmettre la voix humaine et des données. Avec le présent système, il est possible de vérifier les liens d'un système de communication en mesurant le niveau de décibels d'un signal sur chacun des liens, en générant différents signaux de tonalité sur chacun des liens, et en formant un circuit en boucle fermée avec un lien pour réaliser une procédure de vérification en boucle fermée. Toutes ces opérations peuvent être initiées à partir d'un micro-ordinateur situé à un endroit où une ligne téléphonique à tonalité est disponible et avec les dispositifs nécessaires pour brancher le micro-ordinateur à la ligne téléphonique à tonalité.

Le micro-ordinateur peut être un micro-ordinateur IBM (marque de commerce) ou un micro-ordinateur IBM compatible muni d'un microprocesseur 80286 et d'un moniteur monochrome ou couleur de type V.G.A. Il s'est avéré qu'un moniteur couleur est préférable. Un modem intégré ou externe capable de communiquer à une vitesse de 2400 bauds par seconde et qui est compatible avec HAYES est recommandé. Un chargeur de disquettes 3 1/2 ou 5 1/4 doit être fourni pour charger le logiciel. L'ordinateur devrait être aussi muni d'un adapteur graphique.

La station intermédiaire est munie de deux modems ayant des caractéristiques similaires à celui mentionné ci-dessus. Ces modems sont branchés respectivement à des lignes téléphoniques différentes. L'appareil de vérification de la station intermédiaire est branché à un système de commutation fait de plusieurs banques de circuits, qui sont respectivement équipées d'un adapteur de ligne et d'un décodeur d'adresse. Les liens qui doivent être vérifiés passent à travers chacune des banques au moyen de branchements appropriés. Le module de contrôle de chacune des stations éloignées est équipé d'un modem fonctionnant en mode réponse et de plusieurs interfaces de lignes branchées aux liens qui doivent être vérifiés.

En opération, à partir d'un menu de communication, l'utilisateur peut choisir le lien à vérifier. Un annuaire contenant des liens pré-programmés permet cette option. En utilisant l'option téléphone, l'utilisateur entre des commandes dans le micro-ordinateur de façon à effectuer un appel via son modem à l'appareil de vérification de la station intermédiaire. Cette appareil de vérification qui est normalement réglé dans un mode attente reçoit l'appel et confirme la réception au micro-ordinateur. Alors, le micro-ordinateur envoie des signaux de commande à l'appareil de vérification de façon à ce qu'il sélectionne les liens choisis par l'utilisateur et appelle, via son second modem 28 et une autre ligne téléphonique, la station éloignée correspondant au lien qui a été choisi. Le module de contrôle de la station éloignée répond à l'appel, sélectionne le lien à être vérifié et confirme le tout. L'appareil de vérification de la station intermédiaire confirme alors à l'ordinateur que tout est prêt pour une procédure de vérification. L'utilisateur peut alors effectuer différentes opérations pour identifier un problème sur la ligne qui a été choisie ou simplement prendre des mesures sur le lien de communication qui a été choisi de façon à évaluer la qualité de ce lien de communication. L'utilisateur peut aussi effectuer un balayage en fréquence sur le lien de communication choisi pour obtenir une courbe représentative de la réponse en fréquence du lien choisi à des intervalles de 100 Hz entre 300 et 3000 Hz. Lorsque les procédures de vérification sont complétées, l'utilisateur, au moyen d'un menu de communication, met fin aux différentes communications établies avec l'équipement. Toutes les fonctions qui ont été activées retournent alors dans leur mode d'opération en attente. Le système est alors prêt pour effectuer une vérification d'un autre lien de communication.

Tel que mentionné précédemment, l'utilisateur peut choisir et effectuer une procédure de vérification d'un lien de communication au moyen d'un menu de communication produit par un logiciel emmagasiné dans le micro-ordinateur, ce logiciel ayant été écrit pour réaliser ce menu de communication.

Même si la présente invention a été expliquée en illustrant un mode de réalisation préféré de celle-ci, il est à noter que toute modification de ce mode de réalisation préférentiel, à l'intérieur de la portée des revendications qui suivent ne doit pas être considérée comme un changement ou une altération de la nature et de la portée de la présente invention.

## Revendications

1. Appareil de vérification (2) par lequel un utilisateur peut choisir et vérifier des liens de communication (6) d'un premier système de communication qui relie une station intermédiaire (8) à des stations éloignées (10), ledit appareil de vérification (2) étant situé à ladite station intermédiaire (8), chacune desdites stations éloignées (10) comprenant un modem (12) pour établir un second système de communication entre ladite station intermédiaire (8) et lesdites stations éloignées (10), chacune desdites stations éloignées (10) comprenant un module de contrôle (14) relié au second système de communication à partir duquel des signaux de commande peuvent être reçus, chacun desdits modules de contrôle (14) étant aussi relié aux liens de communication (6) correspondants du premier système de façon à ce qu'au moins un desdits liens (6) dudit premier système de communication puisse être choisi entre ladite station intermédiaire (8) et une desdites stations éloignées (10);
ledit appareil de vérification (2) comprenant:
- un premier modem (18) pour recevoir et transmettre des signaux générés à partir d'un ordinateur (22), qui est équipé d'un modem (21) pour communiquer avec ledit premier modem (18) et qui est localisé à un endroit éloigné (4), ledit premier modem (18) faisant partie dudit second système de communication;
- une unité de contrôle (24) reliée audit premier modem (18) pour recevoir et transmettre des signaux;
- un dispositif pouvant générer et mesurer un signal (30), relié à ladite unité de contrôle (24), ledit dispositif (30) ayant une entrée (32, 33) pour recevoir un signal à être mesuré et une sortie (34) pour générer un signal prédéterminé;
- un système de commutation (36) contrôlé par ladite unité de contrôle (24) et reliant les liens de communication (6) correspondants dudit premier système de communication avec ledit dispositif pouvant générer et mesurer un signal (30), par lequel un des liens de communication (6) correspondants dudit premier système de communication peut être choisi par ladite unité de contrôle (24) et relié auxdites entrée (32, 33) et sortie (34) dudit dispositif pouvant générer et mesurer un signal (30); ainsi ledit utilisateur peut choisir au moins un desdits liens (6) dudit premier système de communication entre ladite station intermédiaire (8) et une desdites stations éloignées (10) en envoyant des signaux de commande via ledit second système de communication, et contrôler un procédure de vérification sur ledit lien qui a été choisi par l'utilisateur via ledit second système de communication;
ledit appareil étant caractérisé en ce qu'il comprend:
- un second modem (28) relié à ladite unité de contrôle (24) pour recevoir et transmettre des signaux, ledit second modem (28) faisant partie dudit second système de communication de façon à ce qu'une communication puisse être établie entre ledit ordinateur (22), par le modem (21), et lesdites stations éloignées (10), par le modem (12), via ladite station intermédiaire (8), par les modems (18 et 28), par l'entremise dudit second système de communication.

2. Appareil de vérification (2) selon la revendication 1, dans lequel ladite entrée (32, 33) dudit dispositif (30) pouvant générer et mesurer un signal comprend une entrée intermédiaire (32) pour recevoir un branchement intermédiaire du lien de communication qui a été choisi, et une entrée directe (33) pour recevoir ledit lien de communication qui a été choisi.

3. Appareil de vérification (2) selon la revendication 2, dans lequel ledit dispositif (30) pouvant générer et mesurer un signal comprend:
un premier transformateur de couplage (40) ayant une entrée branchée à ladite entrée directe (33);
des premier et second amplificateurs (44, 46) ayant des impédances d'entrée élevées, branchées respectivement à une sortie dudit transformateur (40) et à ladite entrée intermédiaire (32);
des premiers moyens de commutation (48) ayant deux entrées branchées respectivement aux sorties desdits premier et second amplificateurs (44, 46);
des seconds moyens de commutation (50) ayant une entrée (51) branchée à une sortie dudit premier moyen de commutation (48);
un troisième amplificateur (52) ayant une impédance d'entrée élevée, branchée à une sortie desdits seconds moyens de commutation (50);
un second transformateur de couplage (56) ayant une entrée branchée à une sortie dudit troisième amplificateur (52), et une sortie reliée à ladite sortie (34) dudit dispositif (30) pouvant générer et mesurer un signal;
une unité de mesure (60) ayant une entrée branchée à ladite sortie desdits premiers moyens de commutation (48);
un générateur de signal (62) ayant une sortie reliée à une entrée desdits second moyens de commutation (50); et
un microprocesseur (64) relié à ladite unité de contrôle (24), auxdits moyens de commutation (48, 50), à ladite unité de mesure (60) et audit générateur de signal (62), par lequel ledit utilisateur peut contrôler ladite procédure de vérification en envoyant des signaux de commande audit microprocesseur (64) via ledit second système de communication.

4. Appareil de vérification (2) selon la revendication 1, en combinaison avec lesdits modems (12) et modules de contrôle (14) situés auxdites stations éloignées (10), dans lequel chacun desdits modules de contrôle (14) comprend:
- des premiers moyens de commutation (70) ayant une entrée reliée en série avec une ligne de réception d'un des liens de communication correspondants (6) dudit premier système de communication;
- un premier transformateur de couplage (71) ayant une entrée reliée à une sortie desdits premiers moyens de commutation (70);
- des seconds moyens de commutation (72) ayant une entrée reliée à une sortie dudit premier transformateur de couplage (71);
- des troisièmes moyens de commutation (74) ayant une entrée reliée à une sortie desdits deuxièmes moyens de commutation (72);
- un deuxième transformateur de couplage (76) ayant une entrée reliée à une sortie desdits troisièmes moyens de commutation (74);
- des quatrièmes moyens de commutation (78) ayant une entrée reliée à une sortie dudit deuxième transformateur de couplage (76), et une sortie reliée en série avec une ligne de transmission dudit lien de communication (6) relié auxdits premiers moyens de commutation (70);
- une unité de mesure (80) ayant une entrée reliée à ladite sortie desdits second moyens de commutation (72);
- un générateur de signal (82) ayant une sortie reliée à une entrée desdits troisièmes moyens de commutation (74); et
- un microprocesseur (84) relié au modem correspondant (12), auxdits moyens de commutation (70, 72, 74, 78), à ladite unité de mesure (80) et audit générateur de signal (82), par lequel ledit utilisateur peut contrôler une procédure de vérification à une desdites stations éloignées (10) en envoyant des signaux de commande au microprocesseur correspondant (84) via ledit second système de communication.

5. Appareil de vérification (2) selon la revendication 4, en combinaison avec lesdits modems (12) et modules de contrôle (14) situés auxdites stations éloignées (10), dans lequel chacun desdits modules de contrôle (14) comprend en outre:
- des cinquièmes moyens de commutation (86) ayant une entrée reliée en parallèle avec ladite ligne de réception dudit lien de communication (6) relié auxdits premiers moyens de commutation (70);
- des sixièmes moyens de commutation (88) ayant une entrée reliée à une sortie desdits cinquièmes moyens de commutation (86), et une sortie reliée à la ligne de transmission dudit lien de communication (6) relié auxdits premiers moyens de commutation (70); et
- un branchement intermédiaire (90) ayant une entrée reliée à ladite sortie desdits cinquièmes moyens de commutation (86), et une sortie reliée à une entrée desdits deuxièmes moyens de commutation (72), ledit microprocesseur (84) ayant différents branchements avec lesdits cinquièmes et sixièmes moyens de commutation (86, 88), par lequel ledit utilisateur peut contrôler des procédures de vérification additionnelles à une desdites stations (10) éloignées en envoyant des signaux de commande au microprocesseur correspondant (84) via ledit second système de communication.

6. Appareil de vérification (2) selon la revendication 1, en combinaison avec lesdits modems (12) et modules de contrôle (14) situés auxdites stations éloignées (10), dans lequel chacun desdits modules de contrôle (14) comprend:
- des premiers moyens de commutation (100) ayant une entrée à quatre branchements reliée à un des liens de communication correspondants (6) dudit premier système de communication, ledit lien de communication en question (6) comprenant deux fils de réception et deux fils de transmission, lesdits premiers moyens de commutation (100) comprenant aussi une entrée à deux fils (102) et une première sortie à deux fils (104);
- un premier transformateur de couplage (108) ayant une sortie reliée à ladite entrée à deux fils (102) desdits moyens de commutation (100);
- un second transformateur de couplage (110) ayant une entrée reliée à ladite première sortie à deux fils desdits moyens de commutation (100);
- un premier amplificateur à gain variable (112) ayant une sortie reliée à une entrée dudit premier transformateur (108) via une résistance (114);
- des deuxièmes moyens de commutation (116) ayant une sortie reliée à une entrée dudit premier amplificateur (112);
- un générateur de signal (118) ayant une sortie reliée à une entrée desdits seconds moyens de commutation (116);
- des troisièmes moyens de commutation (120) ayant une première entrée reliée à ladite entrée dudit premier transformateur (108) via un circuit intermédiaire (122), et une deuxième entrée reliée à une sortie dudit second transformateur (110);
- un deuxième amplificateur à gain variable (124) ayant une entrée reliée à une sortie desdits troisièmes moyens de commutation (120);
- des quatrièmes moyens de commutation (126) ayant une entrée reliée une sortie dudit deuxième amplificateur (124), et une sortie reliée à une entrée desdits deuxièmes moyens de commutation (116); et
- une unité centrale de traitement ((128) reliée au modem correspondant (12), auxdits moyens de commutation (100, 116, 120, 126) auxdits amplificateurs (112, 124) et audit générateur de signal (118), par lequel ledit utilisateur peut contrôler une procédure de vérification à une desdits stations éloignées en envoyant des signaux de commande à l'unité de traitement centrale correspondante (128) via ledit second système de communication.

7. Appareil de vérification (2) selon la revendication 6, en combinaison avec lesdits modems (12) et modules de contrôle (14) situés auxdites stations éloignées (10), dans lequel chacun desdits modules de contrôle (14) comprend en outre:
- un amplificateur différentiel (130) relié à une seconde sortie à deux fils (106) desdits premiers moyens de commutation (100), et une sortie reliée à une seconde entrée desdits quatrièmes moyens de commutation (126);
- un détecteur d'ondes sinusoïdales (132) ayant une entrée reliée à ladite sortie desdits quatrièmes moyens de commutation (126), et une sortie reliée à une entrée de ladite unité de traitement central (128); et
- un filtre anti-alias (134) ayant une entrée reliée à ladite sortie desdits quatrièmes moyens de commutation (126), et une sortie reliée à une entrée de ladite unité de traitement central (128).

8. Méthode par laquelle un utilisateur muni d'un ordinateur (22) peut choisir et vérifier des liens de communication (6) d'un premier système de communication qui relie une station intermédiaire (8) à des stations éloignées (10), ladite station intermédiaire étant munie d'un appareil de vérification (2) équipé d'un premier lien de communication (18) d'un second système de communication pour communiquer avec ledit ordinateur (22), et un second lien de communication (28) dudit second système de communication pour communiquer avec lesdites stations éloignées (10), ladite méthode comprenant les étapes suivantes:
(a) établir une première connexion entre ledit ordinateur (22) et ladite station intermédiaire (8) à partir de commandes provenant dudit ordinateur (22) par ledit second système de communication;
(b) établir une deuxième connexion entre ladite station intermédiaire (8) et une desdits stations éloignées (10) qui a été choisie par ledit utilisateur à partir de commandes provenant dudit ordinateur (22) par le second système de communication pour choisir un lien de communication du premier système de communication entre ladite station intermédiaire (8) et la station éloignée qui a été choisie;
(c) envoyer des signaux de commande audit appareil de vérification (2) via ladite première connexion pour initier une procédure de vérification sur ledit lien de communication qui a été choisi à partir de commandes provenant dudit ordinateur (22); et
(d) transmettre des résultats de ladite procédure de vérification dudit appareil de vérification (2) audit ordinateur (22) via ladite première connexion, ainsi un utilisateur peut choisir un lien de communication particulier dudit premier système de communication par l'étape (b), initier ladite procédure de vérification sur ledit lien particulier par l'étape (c) et être informé du résultat de ladite procédure de vérification par l'étape (d).

9. Méthode selon la revendication 8, comprenant en outre une étape par laquelle des signaux de commande sont envoyés à partir dudit ordinateur (22) à ladite station intermédiaire (8) via ladite première connexion, et à ladite station éloignée qui a été choisie via lesdites première et deuxième connexions, pour temporairement débrancher ledit lien de communication qui a été choisi, du premier système de communication, par l'entremise de moyens de commutation présents auxdites stations, de façon à ce que la procédure de vérification effectuée durant l'étape (c) soit une procédure de vérification en boucle fermée.

10. Méthode selon la revendication 8 ou 9, où chacune desdites stations éloignées (10) est munie d'un module de contrôle (14) relié aux liens de communication correspondants (6) dudit premier système de communication, ladite méthode comprenant une étape consistant à envoyer des signaux de commande au module de contrôle de la station éloignée qui a été choisie via lesdites première et deuxième connexions pour initier une procédure de vérification depuis la station éloignée qui a été choisie sur ledit lien de communication qui a été choisi à partir de commandes provenant dudit ordinateur (22).

## Claims

1. A testing unit (2) by which an operator can select and test communication links (6) of a first communication system that links an intermediate station (8) to remote stations (10), said testing unit (2) being located at said intermediate station (8), each of said remote stations (10) comprises a modem (12) to establish a second communication system between said intermediate station (8) and said remote stations (10), each of said remote stations (10) comprises a control module (14) connected to the second communication system from which command signals can be received, each of said control modules (14) being also connected to the corresponding communication links (6) of the first system so that at least one of said links (6) of said first communication system can be selected between said intermediate station (8) and one of said remote stations (10); said testing unit (2) comprises:
a first modem (18) for receiving and transmitting signals generated from a computer (22), which is equipped with a modem (21) to communicate with said first modem (18) and which is located at a remote location (4), said first modem (18) being part of said second communication system;
a control unit (24) connected to said first modem (18) for receiving and transmitting signals therefrom;
a signal generating and measuring device (30) connected to said control unit (24), said device (30) having an input (32, 33) for receiving a signal to be measured and an output (34) for generating a predetermined signal;
a switching system (36) controlled by said control unit (24) and interconnecting the corresponding communication links (6) of said first communication system with said generating and measuring device (30), by which one of the corresponding communication links (6) of said first communication system can be selected by said control unit (24) and connected to said input (32, 33) and output (34) of said signal generating and measuring device (30); whereby said operator can select at least one of said links (6) of said first communication system between said intermediate station (8) and one of said remote stations (10) by sending command signals via said second communication system, and monitor a test procedure on said link that has been selected by said operator via said second communication system;
said unit being characterized in that it comprises:
a second modem (28) connected to said control unit (24) for receiving and transmitting signals therefrom, said second modem (28) being part of said second communication system so that communication can be established between said computer (22), via modem (21), and said remote stations (10), via modem (12), through said intermediate station (8), via modems (18 and 22), by means of said second communication system.

2. A testing unit (2) according to claim 1, wherein said input (32, 33) of said signal generating and measuring device (30) comprises a tap input (32) for receiving a tap connection of a communication link that has been selected and a direct input (33) for receiving said communication link that has been selected.

3. A testing unit (2) according to claim 2, wherein said signal generating and measuring device (30) comprises:
a first coupling transformer (40) having an input connected to said direct input (33);
first and second amplifiers (44, 46) having high impedance inputs connected respectively to an output of said transformer (40) and said tap input (32);
first switching means (48) having two inputs connected respectively to outputs of said first and second amplifiers (44, 46);
second switching means (50) having an input (51) connected to an output of said first switching means (48);
a third amplifier (52) having a high impedance input connected to an output of said second switching means (50);
a second coupling transformer (56) having an input connected to an output of said third amplifier (52), and an output connected to said output (34) of said signal generating and measuring device (30);
a measuring unit (60) having an input connected to said output of said first switching means (48);
a signal generator (62) having an output connected to an input of said second switching means (50); and
a microprocessor (64) connected to said control unit (24), said switching means (48, 50), said measuring unit (60) and said signal generator (62), whereby said operator can monitor said test procedure by sending command signals to said microprocessor (64) via said second communication system.

4. A testing unit (2) according to claim 1, in combination with said modems (12) and control modules (14) situated at said remote stations (10), wherein each of said control modules (14) comprises:
first switching means (70) having an input connected in series with a reception line of one of the corresponding communication links (6) of said first communication system;
a first coupling transformer (71) having an input connected to an output of said first switching means (70);
second switching means (72) having an input connected to an output of said first coupling transformer (71);
third switching means (74) having an input connected to an output of said second switching means (72);
a second coupling transformer (76) having an input connected to an output of said third switching means (74);
fourth switching means (78) having an input connected to an output of said second coupling transformer (76), and an output connected in series with a transmission line of said communication link (6) connected to said first switching means (70);
a measuring unit (80) having an input connected to said output of said second switching means (72);
a signal generator (82) having an output connected to an input of said third switching means (74); and
a microprocessor (84) connected to the corresponding modem (12), said switching means (70, 72, 74, 78), said measuring unit (80) and said signal generator (82), whereby said operator can monitor a test procedure at one of said remote stations (10) by sending command signals to the corresponding microprocessor (84) via said second communication system.

5. A testing unit (2) according to claim 4, in combination with said modems (12) and control modules (14) situated at said remote stations (10), wherein each of said control modules (14) further comprises:
fifth switching means (86) having an input connected in parallel with said reception line of said communication link (6) connected to said first switching means (70);
sixth switching means (88) having an input connected to an output of said fifth switching means (86), and an output connected to said transmission line of said communication link (6) connected to said first switching means (70); and
a tap connection (90) having an input connected to said output of said fifth switching means (86), and an output connected to an input of said second switching means (72), said microprocessor (84) having different connections with said fifth and sixth switching means (86, 88), whereby said operator can monitor additional test procedures at one of said remote stations (10) by sending command signals to the corresponding microprocessor (84) via said second communication system.

6. A testing unit (2) according to claim 1, in combination with said modems (12) and control modules (14) situated at said remote stations (10), wherein each of said control modules (14) comprises:
a first switching means (100) having a four-connection input connected with one of the corresponding communication links (6) of said first communication system, said one communication link (6) comprising two reception wires and two transmission wires, said first switching means (100) also comprising a two-wire input (102) and a first two-wire output (104);
a first coupling transformer (108) having an output connected to said two-wire input (102) of said switching means (100);
a second coupling transformer (110) having an input connected to said first two-wire output of said switching means (100);
a first variable gain amplifier (112) having an output connected to an input of said first transformer (108) via a resistor (114);
a second switching means (116) having an output connected to an input of said first amplifier (112);
a signal generator (118) having an output connected to an input of said second switching means (116);
a third switching means (120) having a first input connected to said input of said first transformer (108) via a buffer (122), and a second input connected to an output of said second transformer (110);
a second variable gain amplifier (124) having an input connected to an output of said third switching means (120);
a fourth switching means (126) having an input connected to an output of said second amplifier (124), and an output connected to an input of said second switching means (116); and
a central processing unit (128) connected to the corresponding modem (12), said switching means (100, 116, 120, 126), said amplifiers (112, 124) and said signal generator (118), whereby said operator can monitor a test procedure at one of said remote stations by sending command signals to the corresponding central processing unit (128) via said second communication system.

7. A testing unit (2) according to claim 6, in combination with said modems (12) and control modules (14) situated at said remote stations (10), wherein each of said control modules (14) further comprises:
a differential amplifier (130) connected to a second two-wire output (106) of said first switching means (100), and an output connected to a second input of said fourth switching means (126);
a sinusoidal wave detector (132) having an input connected to said output of said fourth switching means (126), and an output connected to an input of said central processing unit (128); and
an anti-aliasing filter (134) having an input connected to said output of said fourth switching means (126), and an output connected to an input of said central processing unit (128).

8. A method by which an operator provided with a computer (22) can select and test communication links (6) of a first communication system that links an intermediate station (8) to remote stations (10), said intermediate station being provided with a testing unit (2) equipped with a first communication link (18) of a second communication system to communicate with said computer (22), and a second communication link (28) of said second communication system to communicate with said remote stations (10), said method comprising steps of:
(a) establishing a first connection between said computer (22) and said intermediate station (8), upon commands issued from said computer (22) via said second communication system;
(b) establishing a second connection between said intermediate station (8) and one of said remote stations (10) that has been selected by said operator, upon commands issued from said computer (22) via said second communication system for selecting a communication link of the first communication system between said intermediate station (8) and the remote station (10) that has been selected;
(c) sending command signals to said testing unit (2) via said first connection for initiating a test procedure on said communication link that has been selected, upon commands issued from said computer (22); and
(d) transmission of results of said test procedure from said testing unit (2) to said computer (22) via said first connection, whereby an operator can select a particular communication link of said first communication system by means of step (b), initiate said test procedure on said particular link by means of step (c) and be informed of the result of said test procedure by means of step (d).

9. A method according to claim 8, further comprising a step of sending command signals issued from said computer (22) to said intermediate station (8) via said first connection, and to said remote station that has been selected via said first and second connections, for temporarily disconnecting said communication link that has been selected from said first communication system by means of switching means present at said stations, so that said test procedure performed during step (c) be a closed loop test procedure.

10. A method according to claim 8 or 9, where each of said remote stations (10) is provided with a control module (14) connected to the corresponding communication links (6) of said first communication system, said method comprising a step of sending command signals to the control module of the remote station that has been selected via said first and second connections to initiate a test procedure from the remote station that has been selected over said communication link that has been selected, upon commands issued from said computer (22).

## Patentansprüche

1. Prüfvorrichtung (2) mit der ein Benutzer Kommunikationsverbindungsleitungen (6) eines ersten Kommunikationssystems, das eine Zwischenstation (8) mit entfernten Stationen (10) verbindet, auswählen und prüfen kann, wobei die Prüfvorrichtung (2) bei der Zwischenstation (8) angeordnet ist, jede der entfernten Stationen (10) ein Modem (12) zum Erstellen eines zweiten Kommunikationssystems zwischen der Zwischenstation (8) und den entfernten Stationen (10) aufweist, jede der entfernten Stationen (10) ein mit dem zweiten Kommunikationssystem verbundenes Kontrollmodul (14) aufweist, von dem Steuersignale empfangen werden können, jedes der Kontrollmodule (14) ferner mit entsprechenden Kommunikationsverbindungsleitungen (6) des ersten Systems derart verbunden ist, daß wenigstens eine der Leitungen (6) des ersten Kommunikationssystems zwischen der Zwischenstation (8) und einer der entfernten Stationen (10) gewählt werden kann;
wobei die Prüfvorrichtung (2) aufweist:
- ein erstes Modem (18) zum Empfangen und Senden von Signalen, die von einem an einem entfernten Ort (4) befindlichen Rechner (22) erzeugt werden, der mit einem Modem (21) versehen ist, um mit dem ersten Modem (18) zu kommunizieren, wobei das erste Modem (18) Teil des zweiten Kommunikationssystems ist;
- eine mit dem ersten Modem (18) verbundene Kontrolleinheit (24) zum Empfangen und Senden der Signale;
- eine mit der Kontrolleinheit (24) verbundene Signalerzeugungs- und -meßvorrichtung (30) mit einem Eingang (32, 33) zum Empfangen eines zu messenden Signals und einem Ausgang (34) zum Erzeugen eines vorbestimmten Signals;
- ein von der Kontrolleinheit (24) kontrolliertes und die entsprechenden Kommunikationsverbindungsleitungen (6) des ersten Kommunikationssystems mit der Signalerzeugungs- und -meßvorrichtung (30) verbindendes Wählsystem (36), durch das eine der entsprechenden Kommunikationsverbindungsleitungen (6) des ersten Kommunikationssystems von der Kontrolleinheit (24) gewählt und mit dem Eingang (32, 33) und dem Ausgang (34) der Signalerzeugungs- und -meßvorrichtung (30) verbindbar ist; wobei der Benutzer solchermaßen wenigstens eine der Leitungen (6) des ersten Kommunikationssystems zwischen der Zwischenstation (8) und einer der entfernten Stationen (10) wählen kann, indem er Steuersignale über das zweite Kommunikationssystem ausgibt, und wobei er einen Vorgang des Prüfens der Leitung kontrollieren kann, die von dem Benutzer über das zweite Kommunikationssystem gewählt wurde;
wobei die Vorrichtung dadurch gekennzeichnet ist, daß sie aufweist:
- ein mit der Kontrolleinheit (24) verbundenes zweites Modem (28) zum Empfangen und Senden von Signalen, wobei das zweite Modem (28) Teil des zweiten Kommunikationssystems ist, so daß zwischen dem Rechner (22), über das Modem (22), und den entfernten Stationen (10), über das Modem (12), durch die Zwischenstation (8), über die Modems (18 und 28), unter Zwischenschaltung des zweiten Kommunikationssystems eine Kommunikation herstellbar ist.

2. Prüfvorrichtung (2) nach Anspruch 1, bei der der Eingang (32, 33) der Signalerzeugungs- und -meßvorrichtung (30) einen Zwischeneingang (32) zur temporären Verbindung mit der gewählten Kommunikationsverbindungsleitung und einen Direkteingang (33) zum Empfangen der gewählten Kommunikationsverbindungsleitung aufweist.

3. Prüfvorrichtung (2) nach Anspruch 2, bei der die Signalerzeugungs- und -meßvorrichtung (30) aufweist:
- einen ersten Kopplungstransformator (40) mit einem mit dem Direkteingang (33) verbundenen Eingang;
- einen ersten und einen zweiten Verstärker (44, 46) mit hohen Eingangsimpedanzen, die jeweils mit einem Ausgang des Transformators (40) und dem Zwischeneingang (32) verbunden sind;
- eine erste Wähleinrichtung (48) mit zwei Eingängen, die jeweils mit den Ausgängen des ersten und des zweiten Verstärkers (44, 46) verbunden sind;
- eine zweite Wähleinrichtung (50) mit einem Eingang (51), der mit einem Ausgang der ersten Wähleinrichtung (48) verbunden ist;
- einen dritten Verstärker (52) mit hoher Eingangsimpedanz, der mit einem Ausgang der zweiten Wähleinrichtung (50) verbunden ist;
- einen zweiten Kopplungstransformator (56) mit einem Eingang, der mit einem Ausgang des dritten Verstärkers (52) verbunden ist, und einem Ausgang, der mit dem Ausgang (34) der Signalerzeugungs- und -meßvorrichtung (30) verbunden ist;
- eine Meßeinheit (60) mit einem Eingang, der mit dem Ausgang der ersten Wähleinrichtung (48) verbunden ist;
- eine Signalerzeugungseinrichtung (62) mit einem Ausgang, der mit einem Eingang der zweiten Wähleinrichtung (50) verbunden ist; und
- einen Mikroprozessor (64), der mit der Kontrolleinheit (24), den Wähleinrichtungen (48, 50), der Meßeinheit (60) und der Signalerzeugungseinrichtung (62) verbunden ist, und über welchen der Benutzer den Prüfvorgang kontrollieren kann, indem er Steuersignale über das zweite Kommunikationssystem an den Mikroprozessor (64) sendet.

4. Prüfvorrichtung (2) nach Anspruch 1, in Kombination mit den Modems (12) und den Kontrollmodulen (14) in den entfernten Stationen (10), wobei jedes der Kontrollmodule (14) aufweist:
- eine erste Wähleinrichtung (70) mit einem Eingang, der mit einer Empfangsleitung einer der entsprechenden Kommunikationsverbindungsleitungen (6) des ersten Kommunikationssystems verbunden ist;
- einen ersten Kopplungstransformator (71) mit einem Eingang, der mit einem Ausgang der ersten Wähleinrichtung (70) verbunden ist;
- eine zweite Wähleinrichtung (72) mit einem Eingang, der mit einem Ausgang des ersten Kopplungstransformators (71) verbunden ist;
- eine dritte Wähleinrichtung (74) mit einem Eingang, der mit einem Ausgang der zweiten Wähleinrichtung (72) verbunden ist;
- einen zweiten Kopplungstransformator (76) mit einem Eingang, der mit einem Ausgang der dritten Wähleinrichtung (74) verbunden ist;
- eine vierte Wähleinrichtung (78) mit einem Eingang, der mit einem Ausgang des zweiten Kopplungstransformators (76) verbunden ist, und mit einem Ausgang, der in Reihe mit einer Übertragungsleitung der mit der ersten Wähleinrichtung (70) verbundenen Kommunikationsverbindungsleitung (6) verbunden ist;
- eine Meßeinheit (80) mit einem Eingang, der mit dem Ausgang der zweiten Wähleinrichtung (72) verbunden ist;
- eine Signalerzeugungseinrichtung (82) mit einem Ausgang, der mit einem Eingang der dritten Wähleinrichtung (74) verbunden ist; und
- einen Mikroprozessor (84), der mit dem entsprechenden Modem (12), den Wähleinrichtungen (70, 72, 74, 78), der Meßeinheit (80) und der Signalerzeugungseinrichtung (82) verbunden ist, und über welchen der Benutzer den Prüfvorgang an einer der entfernten Stationen (10) kontrollieren kann, indem er Steuersignale über das zweite Kommunikationssystem an den entsprechenden Mikroprozessor (84) sendet.

5. Prüfvorrichtung (2) nach Anspruch 4, in Kombination mit den Modems (12) und den Kontrollmodulen (14) in den entfernten Stationen (10), wobei jedes der Kontrollmodule (14) ferner aufweist:
- eine fünfte Wähleinrichtung (86) mit einem Eingang, der parallel mit der Empfangsleitung der mit der ersten Wähleinrichtung (70) verbundenen Kommunikationsverbindungsleitung (6) verbunden ist;
- eine sechste Wähleinrichtung (88) mit einem Eingang, der mit einem Ausgang der fünften Wähleinrichtung (86) verbunden ist, und mit einem Ausgang, der mit der Übertragungsleitung der mit der ersten Wähleinrichtung (70) verbundenen Kommunikationsverbindungsleitung (6) verbunden ist; und
- eine temporäre Verbindung (90) mit einem Eingang, der mit dem Ausgang der fünften Wähleinrichtung (86) verbunden ist, und mit einem Ausgang, der mit einem Eingang der zweiten Wähleinrichtung (72) verbunden ist, wobei der Mikroprozessor (84) verschiedene Verbindungen zu der fünften und der sechsten Wähleinrichtung (86, 88) aufweist, und über welchen der Benutzer zusätzliche Prüfvorgänge an einer der entfernten Stationen (10) kontrollieren kann, indem er Steuersignale über das zweite Kommunikationssystem an den entsprechenden Mikroprozessor (84) sendet.

6. Prüfvorrichtung (2) nach Anspruch 1, in Kombination mit den Modems (12) und den Kontrollmodulen (14) in den entfernten Stationen (10), wobei jedes der Kontrollmodule (14) aufweist:
- eine erste Wähleinrichtung (100) mit einem vierfach verzweigten Eingang, der mit einer der entsprechenden Kommunikationsverbindungsleitungen (6) des ersten Kommunikationssystems verbunden ist, wobei die betreffende Kommunikationsverbindungsleitung (6) zwei Empfangsleiter und zwei Übertragungsleiter aufweist, und wobei die erste Wähleinrichtung (100) ebenfalls einen zweiadrigen Eingang (102) und einen ersten zweiadrigen Ausgang (104) aufweist;
- einen ersten Kopplungstransformator (108) mit einem Ausgang, der mit dem zweiadrigen Eingang (102) der Wähleinrichtung (100) verbunden ist;
- einen zweiten Kopplungstransformator (110) mit einem Eingang, der mit dem ersten zweiadrigen Ausgang (104) der Wähleinrichtung (100) verbunden ist;
- einen ersten variablen Verstärker (112) mit einem Ausgang, der mit einem Eingang des ersten Transformators (108) über einen Widerstand (114) verbunden ist;
- eine zweite Wähleinrichtung (116) mit einem Ausgang, der mit einem Eingang des ersten Verstärkers (112) verbunden ist;
- eine Signalerzeugungseinrichtung (118) mit einem Ausgang, der mit einem Eingang der zweiten Wähleinrichtung (116) verbunden ist;
- eine dritte Wähleinrichtung (120) mit einem ersten Eingang, der mit dem Eingang des ersten Transformators (118) über eine Zwischenschaltung (122) verbunden ist, und mit einem zweiten Eingang, der mit einem Ausgang des zweiten Transformators (110) verbunden ist;
- einen zweiten variablen Verstärker (124) mit einem Eingang, der mit einem Ausgang der dritten Wähleinrichtung (120) verbunden ist;
- eine vierte Wähleinrichtung (126) mit einem Eingang, der mit einem Ausgang des zweiten Verstärkers (124) verbunden ist, und einem Ausgang, der mit einem Eingang der zweiten Wähleinrichtung (116) verbunden ist; und
- eine Zentralverarbeitungseinheit (128), die mit dem entsprechenden Modem (12), den Wähleinrichtungen (100, 116, 120, 126), den Verstärkern (112, 124) und der Signalerzeugungseinrichtung (118) verbunden ist, über welche der Benutzer den Prüfvorgang an einer der entfernten Stationen kontrollieren kann, indem er Steuersignale über das zweite Kommunikationssystem an die entsprechende Zentralverarbeitungseinheit (128) sendet.

7. Prüfvorrichtung (2) nach Anspruch 6, in Kombination mit den Modems (12) und den Kontrollmodulen (14) in den entfernten Stationen (10), wobei jedes der Kontrollmodule (14) ferner aufweist:
- einen Differentialverstärker (130), der mit einem zweiten zweiadrigen Ausgang (106) der ersten Wähleinrichtung (100) verbunden ist, und einem Ausgang, der mit einem zweiten Eingang der vierten Wähleinrichtung (126) verbunden ist;
- einen Sinuswellendetektor (132) mit einem Eingang, der mit dem Ausgang der vierten Wähleinrichtung (126) verbunden ist, und einem Ausgang, der mit einem Eingang der Zentralverarbeitungseinheit (128) verbunden ist; und
- ein Anti-Rauschfilter (134) mit einem Eingang, der mit dem Ausgang der vierten Wähleinrichtung (126) verbunden ist, und einem Ausgang, der mit einem Eingang der Zentralverarbeitungseinheit (128) verbunden ist.

8. Verfahren, mit dem ein mit einem Rechner (22) versehener Benutzer Kommunikationsverbindungsleitungen (6) eines ersten Kommunikationssystems, das eine Zwischenstation (8) mit entfernten Stationen (10) verbindet, auswählen und prüfen kann, wobei die Zwischenstation mit einer Prüfvorrichtung (2) versehen ist, die zur Kommunikation mit dem Rechner (22) eine erste Kommunikationsverbindungsleitung (18) eines zweiten Kommunikationssystems und zur Kommunikation mit den entfernten Stationen (10) eine zweite Kommunikationsverbindungsleitung (28) aufweist, wobei das Verfahren die folgenden Schritte umfaßt:
(a) Herstellen einer ersten Verbindung zwischen dem Rechner (22) und der Zwischenstation (8) mittels von dem Rechner (22) über das zweite Kommunkationssystem kommender Befehle;
(b) Herstellen einer zweiten Verbindung zwischen der Zwischenstation (8) und einer der entfernten Stationen (10), die von dem Benutzer durch die vom Rechner (22) über das zweite Kommunikationssystem kommenden Befehle gewählt wurde, um eine Kommunikationsverbindungsleitung des ersten Kommunikationssystems zwischen der Zwischenstation (8) und der gewählten entfernten Station (10) zu wählen;
(c) Senden von Steuersignalen an die Prüfvorrichtung (2) über die erste Verbindung, um einen Vorgang zur Überprüfung der Kommunikationsverbindungsleitung einzuleiten, die durch die vom Rechner (22) kommenden Befehle gewählt wurde; und
(d) Senden der Ergebnisse des Prüfverfahrens von der Prüfvorrichtung (2) an den Rechner (22) über die erste Verbindung, wodurch ein Benutzer eine bestimmte Kommunikationsverbindungsleitung des ersten Kommunikationssystems durch den Schritt (b) auswählen kann, das Verfahren zur Prüfung der bestimmten Verbindungsleitung durch den Schritt (c) einleiten kann und durch den Schritt (d) über das Ergebnis des Prüfverfahrens informiert wird.

9. Verfahren nach Anspruch 8, ferner mit einem Schritt, mit dem Steuersignale über die erste Verbindung vom Rechner (22) an die Zwischenstation (8) und an die über die erste und die zweite Verbindung gewählte entfernte Station geleitet werden, um die gewählte Kommunikationsverbindungsleitung durch Zwischenschalten der in den Stationen vorgesehenen Wähleinrichtungen vorübergehend von dem ersten Kommunikationssystem zu entkoppeln, derart, daß der während des Schritts (c) durchgeführte Prüfvorgang ein Prüfvorgang mit geschlossenem Kreis ist.

10. Verfahren nach Anspruch 8 oder 9, bei dem jede der entfernten Stationen (10) mit einem Kontrollmodul (14) versehen ist, das mit den entsprechenden Kommunikationsverbindungsleitungen (6) des ersten Kommunikationssystems verbunden ist, wobei das Verfahren den folgenden Schritt aufweist: Senden von Steuersignalen über die erste und die zweite Verbindung an das Kontrollmodul der gewählten entfernten Station, um von der gewählten entfernten Station aus einen Vorgang zur Überprüfung der Kommunikationsverbindungsleitung einzuleiten, die durch die vom Rechner (22) kommenden Befehle gewählt wurde.
